# EUROPEAN PATENT APPLICATION

(11) **EP 4 629 045 A1**
(43) Date of publication of application: **08.10.2025**
(21) Application number: 23901060.6
(22) Date of filing: 05.12.2023
(51) Int. Cl.: G06F 3/04842, G06F 3/0481, G06F 1/16, G06F 3/01, G06F 3/00, G06V 40/18

(54) **WEARABLE DEVICE FOR ADJUSTING DISPLAY STATE OF VIRTUAL OBJECT ACCORDING TO MOVEMENT OF WEARABLE DEVICE, AND CONTROL METHOD THEREOF**

(30) Priority: 06.12.2022 KR 20220168542; 09.12.2022 KR 20220171845; 10.05.2023 KR 20230060313
(71) Applicant: Samsung Electronics Co., Ltd., Suwon-si, Gyeonggi-do 16677 (KR)
(72) Inventor: KANG, Changtaek, Suwon-si, Gyeonggi-do 16677 (KR); YOON, Jongmin, Suwon-si, Gyeonggi-do 16677 (KR)
(74) Representative: HGF
(86) International application number: PCT/KR2023/019883
(87) International publication number: WO 2024/123041

(57) **Abstract**

Disclosed are a wearable device for adjusting the display state of a virtual object according to movement of the wearable device, and a control method thereof. A wearable according to an embodiment of the present document comprises: at least one sensor; a display module; and at least one processor, wherein the at least one processor may be configured to: determine, by using the at least one sensor, whether the wearable device is worn by a user; display at least one virtual object by using the display module on the basis of the result of the determination; identify movement of the wearable device while in the state in which the at least one virtual object is being displayed; and on the basis of attributes of the at least one virtual object being displayed, control the display module such that the display state of the at least one virtual object is corrected according to the movement of the wearable device.

## Description

### [Technical Field]

The disclosure relates to a wearable device for adjusting a display state of a virtual object according to the movement of the wearable device, and a control method therefor.

### [Background Art]

Various services and additional functions provided through wearable devices, such as AR glasses, are gradually increasing. In order to increase the utility value of these wearable devices and satisfy the needs of various users, communication service providers or wearable device manufacturers are competitively developing wearable devices for providing various functions and differentiating themselves from other companies. Accordingly, various functions provided through wearable devices are also becoming advanced.

### [Detailed Description of the Invention]

### [Technical Problem]

Wearable devices (e.g., glasses-type wearable devices configured to provide augmented reality) may provide a user with a virtual object in a shaking state through the wearable device when the user's body wearing the wearable device moves. As a result, according to functions or operations provided by conventional wearable devices, a virtual object is provided to the user through the wearable device while the wearable device is moving, which may cause visual discomfort to the user in relation to a real object whose location is fixed in the real world.

According to an embodiment of the disclosure, there may be provided a wearable device capable of performing, when a movement of a user wearing the wearable device occurs, functions or operations in which the display state of at least one virtual object is able to be maintained despite the movement of the wearable device by correcting and displaying the display state (e.g., display position and/or display direction) of at least one virtual object provided through the wearable device.

According to an embodiment of the disclosure, there may be provided a method for controlling a wearable device, which is capable of performing, when a movement of a user wearing the wearable device occurs, functions or operations in which the display state of at least one virtual object is able to be maintained despite the movement of the wearable device by correcting and displaying the display state (e.g., display position and/or display direction) of at least one virtual object provided through the wearable device.

### [Technical Solution]

A wearable device according to an embodiment of the disclosure may include at least one sensor, a display module, and at least one processor, wherein the at least one processor may be configured to determine, using the at least one sensor, whether the wearable device is worn by a user, based on a result of the determination, display, using the display module, at least one virtual object, identify movement of the wearable device while the at least one virtual object is being displayed, and, based on an attribute of the at least one virtual object being displayed, control the display module so that a display state of the at least one virtual object is corrected according to the movement of the wearable device.

A method for controlling a wearable device according to an embodiment of the disclosure may include determining, using at least one sensor of the wearable device, whether the wearable device is worn by a user, based on a result of the determination, displaying, using a display module of the wearable device, at least one virtual object, identifying movement of the wearable device while the at least one virtual object is being displayed, and, based on an attribute of the at least one virtual object being displayed, controlling the display module so that a display state of the at least one virtual object is corrected and displayed according to the movement of the wearable device,.

### [Advantageous Effects]

According to an embodiment of the disclosure, it is possible to provide a wearable device capable of performing, when a movement of a user wearing the wearable device occurs, functions or operations in which the display state of at least one virtual object is able to be maintained despite the movement of the wearable device by correcting and displaying the display state (e.g., display position and/or display direction) of at least one virtual object provided through the wearable device.

The effects according to various embodiments of the disclosure are not limited to the effects described above, and it is obvious to those skilled in the art that various effects are contained in the disclosure.

### [Brief Description of Drawings]

FIG. 1 is a block diagram of an electronic device in a network environment according to various embodiments of the disclosure.
FIG. 2A is a perspective view illustrating the internal configuration of a wearable device (e.g., an electronic device) according to an embodiment of the disclosure.
FIG. 2B is an exploded perspective view of a wearable device (e.g., an electronic device) according to an embodiment of the disclosure.
FIGS. 3A and 3B are exemplary drawings illustrating a function or operation of changing and displaying a display state of at least one virtual object, based on movement (e.g., rotation) of a wearable device, according to the prior art.
FIG. 4 is an exemplary drawing illustrating a function or operation of correcting and displaying a display state of at least one virtual object by a wearable device, despite the movement of the wearable device, according to an embodiment of the disclosure.
FIGS. 5A and 5B are exemplary drawings illustrating, in relation to a user interface, a function or operation of correcting and displaying a display state of at least one virtual object by a wearable device according to an embodiment of the disclosure.
FIGS. 6A to 6C are exemplary drawings illustrating the arrangement of a driving module configured to adjust the position of a display module for correcting a display state of at least one virtual object according to an embodiment of the disclosure.
FIGS. 7A to 7C are exemplary drawings illustrating at least one virtual object to which correction of the display state is not applied according to an embodiment of the disclosure.
FIG. 8 is an exemplary drawing illustrating a function or operation of a wearable device for correcting a display state of at least some virtual objects, among a plurality of virtual objects, based on an attribute of each of the plurality of virtual objects, according to an embodiment of the disclosure.
FIGS. 9A and 9B are exemplary drawings illustrating, in relation to a user interface, a function or operation according to the embodiment of the disclosure described in FIG. 8.
FIG. 10 is an exemplary drawing illustrating a function or operation of rotating and displaying at least one virtual object according to movement (e.g., rotation) of a wearable device when the wearable device is rotated at a threshold angle or more according to an embodiment of the disclosure.
FIGS. 11A and 11B are exemplary drawings illustrating, in relation to a user interface, a function or operation according to the embodiment of the disclosure described in FIG. 10.
FIG. 12 is an exemplary drawing illustrating a function or operation of displaying at least one virtual object, based on a gaze of a user wearing a wearable device, according to an embodiment of the disclosure.
FIG. 13 is an exemplary drawing illustrating, in relation to a user interface, a function or operation according to the embodiment of the disclosure described in FIG. 12.

### [Mode for Carrying out the Invention]

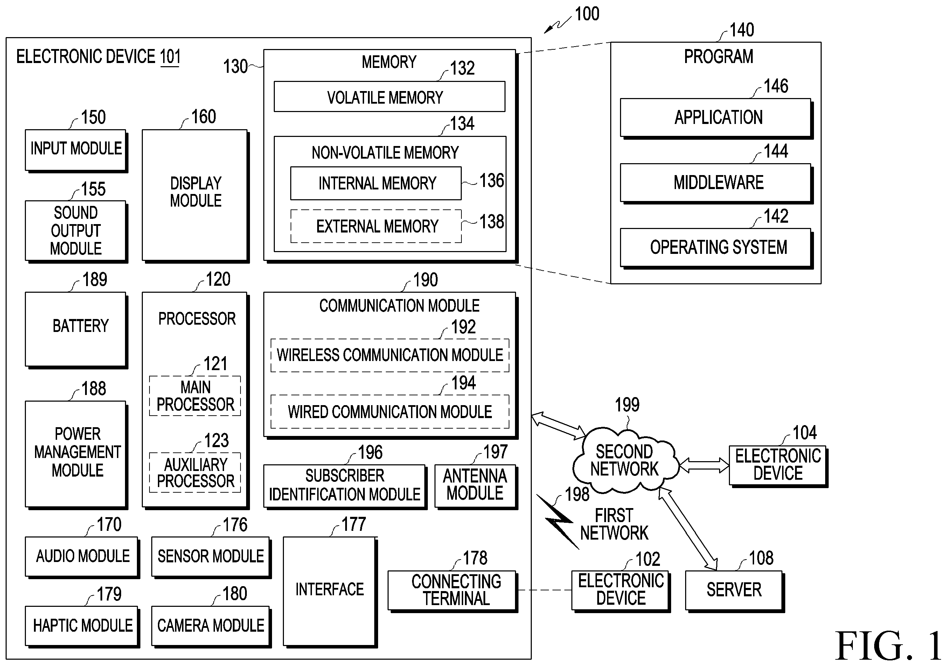

FIG. 1 is a block diagram illustrating an electronic device 101 in a network environment 100 according to various embodiments. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

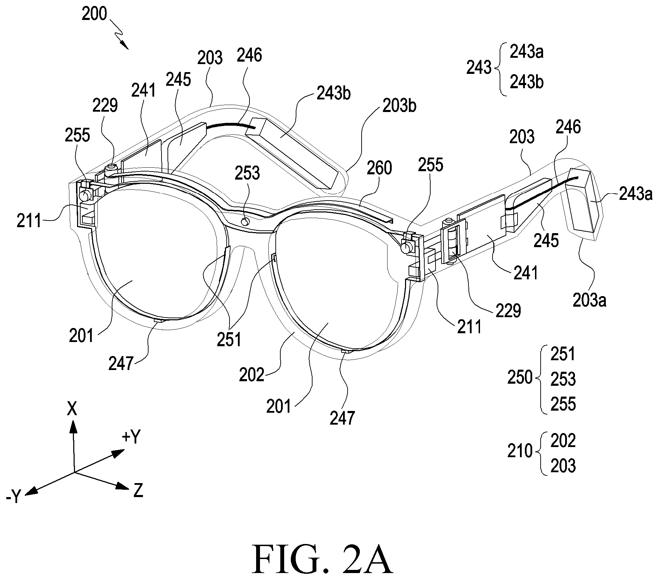

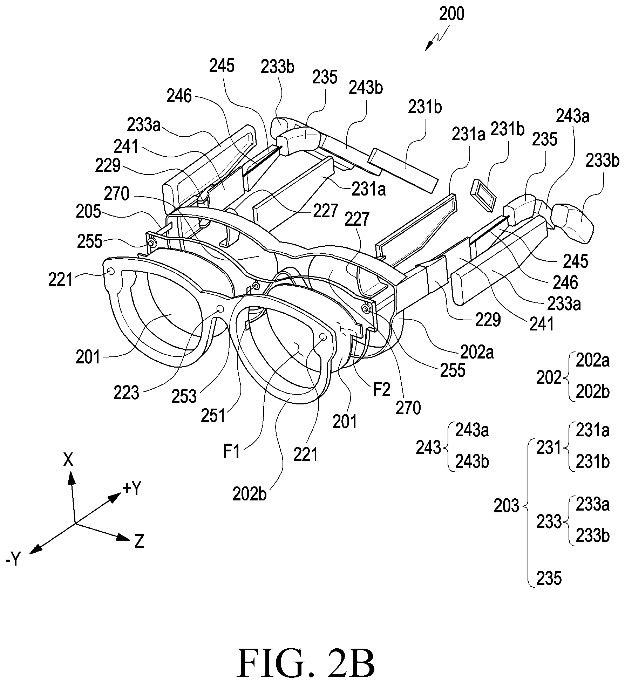

FIG. 2A is a perspective view illustrating the internal configuration of a wearable device according to an embodiment of the disclosure. FIG. 2B is an exploded perspective view of a wearable device according to an embodiment of the disclosure.

Referring to FIG. 2A, the wearable device 200 is an electronic device in the form of glasses, and a user may visually recognize objects or surrounding environments while wearing the wearable device 200. For example, the wearable device 200 may be a head mounting device (HMD) or smart glasses capable of directly providing images in front of the user's eyes. Some or entirety of the configuration of the wearable device 200 in FIG. 2A may be the same as the configuration of the electronic device 101 in FIG. 1.

According to various embodiments, the wearable device 200 may include a housing 210 that forms the exterior of the wearable device 200. The housing 210 may provide a space in which components of the wearable device 200 may be stored. For example, the housing 210 may include a lens frame 202 and at least one wearing member 203.

According to various embodiments, the wearable device 200 may include a display member 201 capable of providing visual information to the user. For example, the display member 201 may include a module equipped with a lens, a display, a waveguide, and/or a touch circuit. According to an embodiment, the display member 201 may be formed transparently or translucently. According to an embodiment, the display member 201 may include a window member whose light transmittance may be adjusted as a translucent glass material or a tinting concentration is adjusted. According to an embodiment, a pair of display members 201 may be provided to be positioned to correspond to the left and right eyes of the user, respectively, while the wearable device 200 is worn on the user's body.

According to various embodiments, the lens frame 202 may accommodate at least a portion of the display member 201. For example, the lens frame 202 may surround at least a portion of the edge of the display member 201. According to an embodiment, the lens frame 202 may position at least one of the display members 201 to correspond to the user's eye. According to an embodiment, the lens frame 202 may be a rim of typical eyeglasses. According to an embodiment, the lens frame 202 may include at least one closed curve surrounding the display member 201.

According to various embodiments, the wearing member 203 may extend from the lens frame 202. For example, the wearing member 203 may extend from an end of the lens frame 202 and may be supported or positioned on the user's body (e.g., an ear) together with the lens frame 202. In an embodiment, the wearing member 203 may be pivotally coupled to the lens frame 202 via a hinge structure 229.

According to various embodiments, the wearable device 200 may include a hinge structure 229 configured such that the wearing member 203 is folded relative to the lens frame 202. The hinge structure 229 may be disposed between the lens frame 202 and the wearing member 203. The user may fold the wearing members 203 relative to the lens frame 202 so that they partially overlap, and may carry or store it while not wearing the wearable device 200.

Referring to FIGS. 2A and 2B, the wearable device 200 may include components (e.g., at least one circuit board 241 (e.g., a printed circuit board (PCB), a printed board assembly (PBA), a flexible PCB (FPCB), or a rigid-flexible PCB (RFPCB)), at least one battery 243, at least one speaker module 245, at least one power transmission structure 246, and a camera module 250) stored in a housing 210. The entirety or some of the configuration of the housing 210 in FIG. 2B may be the same as the configuration of the display member 201, the lens frame 202, the wearing member 203, and the hinge structure 229 in FIG. 2A.

According to various embodiments, the wearable device 200 may obtain and/or recognize a visual image of an object or environment in a direction (e.g., the -Y direction) in which the user is looking at or the wearable device 200 is facing using a camera module 250 (e.g., the camera module 180 in FIG. 1), and may receive information about the object or environment from an external electronic device (e.g., the electronic device 102 or 104 or the server 108 in FIG. 1) through a network (e.g., the first network 198 or the second network 199 in FIG. 1). In an embodiment, the wearable device 200 may provide the provided information about the object or environment to the user in an acoustic or visual form. The wearable device 200 may provide the provided information about the object or environment to the user in a visual form through the display member 201 using a display module (e.g., the display module 160 in FIG. 1). For example, the wearable device 200 may visualize the information about the object or environment and combine it with an actual image of the user's surrounding environment, thereby implementing augmented reality.

According to various embodiments, the display member 201 may include a first surface F1 facing a direction (e.g., the -Y direction) in which external light is incident and a second surface F2 facing the opposite direction (e.g., the +Y direction) of the first surface F1. When the user wears the wearable device 200, at least some of the light or image incident through the first surface F1 may pass through the second surface F2 of the display member 201 arranged to face the user's left eye and/or right eye and reach the user's left eye and/or right eye.

According to various embodiments, the lens frame 202 may include at least two or more frames. For example, the lens frame 202 may include a first frame 202a and a second frame 202b. According to an embodiment, when the user wears the wearable device 200, the first frame 202a may be a frame facing the user's face, and the second frame 202b may be a portion of the lens frame 202 spaced apart from the first frame 202a in a direction of the user's gaze (e.g., the -Y direction).

According to various embodiments, an optical output device 211 may provide an image and/or a video to the user. For example, the optical output device 211 may include a display panel (not shown) capable of outputting a video, and a lens (not shown) corresponding to the user's eye and guiding the video to the display member 201. For example, the user may obtain an image output from the display panel of the optical output device 211 through the lens of the optical output device 211. According to various embodiments, the optical output device 211 may include a device configured to display various information. For example, the optical output device 211 may include at least one of a liquid crystal display (LCD), a digital mirror device (DMD), a liquid crystal on silicon (LCoS), an organic light-emitting diode (OLED), or a micro-light-emitting diode (micro-LED). According to an embodiment, in the case where the optical output device 211 and/or the display member 201 includes one of an LCD, a DMD, or an LCoS, the wearable device 200 may include a light source that emit light to a display area of the optical output device 211 and/or the display member 201. According to an embodiment, in the case where the optical output device 211 and/or the display member 201 includes one of an OLED or a micro-LED, the wearable device 200 may provide a virtual image to a user without including a separate light source.

According to various embodiments, at least a portion of the optical output device 211 may be disposed inside the housing 210. For example, the optical output devices 211 may be disposed in the wearing member 203 or the lens frame 202 to correspond to the user's right eye and left eye, respectively. According to an embodiment, the optical output device 211 may be connected to the display member 201 and may provide an image to the user through the display member 201.

According to various embodiments, the circuit board 241 may include components for driving the wearable device 200. For example, the circuit board 241 may include at least one integrated circuit chip, and at least one of the processor 120, the memory 130, the power management module 188, or the communication module 190 in FIG. 1 may be provided to the integrated circuit chip. According to an embodiment, the circuit board 241 may be disposed in the wearing member 203 of the housing 210. According to an embodiment, the circuit board 241 may be electrically connected to the battery 243 through the power transmission structure 246. In an embodiment, the circuit board 241 may be connected to the flexible printed circuit board 205 and may transmit electrical signals to electronic components (e.g., the optical output device 211, the camera module 250, and the light-emitting unit) of the electronic device through the flexible printed circuit board 205. According to an embodiment, the circuit board 241 may be a circuit board including an interposer.

According to various embodiments, the flexible printed circuit board 205 may extend from the circuit board 241 across the hinge structure 229 to the interior of the lens frame 202, and may be arranged in at least a portion of the periphery of the display member 201 inside the lens frame 202.

According to various embodiments, a battery 243 (e.g., the battery 189 in FIG. 1) may be electrically connected to the components (e.g., the optical output device 211, the circuit board 241, the speaker module 245, the microphone module 247, and the camera module 250) of the wearable device 200, and may supply power to the components of the wearable device 200.

According to various embodiments, at least a portion of the battery 243 may be disposed in the wearing member 203. According to an embodiment, the battery 243 may be disposed at the ends 203a and 203b of the wearing member 203. For example, the battery 243 may include a first battery 243a disposed at the first end 203a of the wearing member 203 and a second battery 243b disposed at the second end 203b.

According to various embodiments, the speaker module 245 (e.g., the audio module 170 or the sound output module 155 in FIG. 1) may convert an electrical signal into sound. At least a part of the speaker module 245 may be disposed inside the wearing member 203 of the housing 210. According to an embodiment, the speaker module 245 may be positioned inside the wearing member 203 so as to correspond to the user's ear. For example, the speaker module 245 may be disposed between the circuit board 241 and the battery 243.

According to various embodiments, the power transmission structure 246 may transmit power from the battery 243 to electronic components (e.g., the optical output device 211) of the wearable device 200. For example, the power transmission structure 246 may be electrically connected to the battery 243 and/or the circuit board 241, and the circuit board 241 may transmit power received through the power transmission structure 246 to the optical output device 211. According to an embodiment, the power transmission structure 246 may be connected to the circuit board 241 across the speaker module 245. For example, when the wearable device 200 is viewed from the side (e.g., in the Z-axis direction), the power transmission structure 246 may at least partially overlap the speaker module 245.

According to various embodiments, the power transmission structure 246 may configured to transmit power. For example, the power transmission structure 246 may include a flexible printed circuit board or a wire. For example, the wire may include a plurality of cables (not shown). In various embodiments, the shape of the power transmission structure 246 may be variously modified in consideration of the number and/or types of cables.

In various embodiments, the microphone module 247 (e.g., the input module 150 and/or the audio module 170 in FIG. 1) may convert sound into an electrical signal. In an embodiment, the microphone module 247 may be arranged in at least a portion of the lens frame 202. For example, at least one microphone module 247 may be disposed at the lower end (e.g., in the direction toward the -X-axis) and/or the upper end (e.g., in the direction toward the X-axis) of the wearable device 200. According to various embodiments, the wearable device 200 may recognize the user's voice more clearly using voice information (e.g., sound) obtained from at least one microphone module 247. For example, the wearable device 200 may distinguish voice information from ambient noise, based on the obtained voice information and/or additional information (e.g., low-frequency vibration of the user's skin and bones). For example, the wearable device 200 may clearly recognize the user's voice and perform a function of reducing ambient noise (e.g., noise canceling). The microphone module 247 according to an embodiment of the disclosure may include a plurality of microphone modules 247 to perform beamforming. The microphone module 247 according to an embodiment of the disclosure may include an omnidirectional or directional microphone.

According to various embodiments, the camera module 250 may capture still images and/or moving images. The camera module 250 may include at least one of a lens, at least one image sensor, an image signal processor, or a flash. According to an embodiment, the camera module 250 may be disposed inside a lens frame 202 and may be arranged around the display member 201.

According to various embodiments, the camera module 250 may include at least one first camera module 251. According to an embodiment, the first camera module 251 may capture a trajectory of a user's eye (e.g., pupil) or gaze. For example, the first camera module 251 may capture a reflection pattern of light emitted from the light-emitting unit to the user's eyes. For example, the light-emitting unit may emit light in an infrared band for tracking a trajectory of a user's gaze using the first camera module 251. For example, the light-emitting unit may include an IR LED. According to an embodiment, a processor (e.g., the processor 120 in FIG. 1) may adjust the position of a virtual image projected onto the display member 201 so that the virtual image corresponds to the direction to which the user's eyes are directed. According to an embodiment, the first camera module 251 may include a global shutter (GS)-type camera and track a trajectory of user's eyes or gaze using a plurality of first camera modules 251 of the same standard and performance.

According to various embodiments, the first camera module 251 may periodically or aperiodically transmit information (e.g., trajectory information) related to the trajectory of the user's eyes or gaze to a processor (e.g., the processor 120 in FIG. 1). According to an embodiment, the first camera module 251 may transmit the trajectory information to the processor when it detects that the user's gaze has changed (e.g., the eyes move more than a reference value while the head is not moving), based on the trajectory information.

According to various embodiments, the camera module 250 may include a second camera module 253. According to an embodiment, the second camera module 253 may capture an external image. According to an embodiment, the second camera module 253 may be a global shutter-type or rolling shutter (RS)-type camera. According to an embodiment, the second camera module 253 may capture an external image through a second optical hole 223 formed in the second frame 202b. For example, the second camera module 253 may include a high-resolution color camera, and may be a high-resolution (HR) or photo video (PV) camera. In addition, the second camera module 253 may provide an auto focus function (AF) and an optical image stabilizer (OIS).

According to various embodiments, the wearable device 200 may include a flash (not shown) disposed adjacent to the second camera module 253. For example, the flash (not shown) may provide light to increase the brightness (e.g., illuminance) around the wearable device 200 when obtaining an external image of the second camera module 253, and may reduce difficulties in obtaining images due to a dark environment, mixing of various light sources, and/or reflection of light.

According to various embodiments, the camera module 250 may include at least one third camera module 255. According to an embodiment, the third camera module 255 may capture a user's motion through a first optical hole 221 formed in the lens frame 202. For example, the third camera module 255 may capture a user's gesture (e.g., hand motion). The third camera module 255 and/or the first optical hole 221 may be respectively disposed at both ends of the lens frame 202 (e.g., the second frame 202b), for example, at both ends of the lens frame 202 (e.g., the second frame 202b) in the X direction. According to an embodiment, the third camera module 255 may be a global shutter (GS)-type camera. For example, the third camera module 255 may be a camera supporting 3DoF (degrees of freedom) or 6DoF, and may provide 360-degree space (e.g., omnidirectional) and position recognition, and/or movement recognition. According to an embodiment, the third camera module 255 may be a stereo camera, and may perform simultaneous localization and mapping (SLAM) and a user movement recognition function using a plurality of global shutter-type cameras of the same standard and performance. According to an embodiment, the third camera module 255 may include an infrared (IR) camera (e.g., a time-of-flight (TOF) camera or a structured light camera). For example, the IR camera may operate as at least a part of a sensor module (e.g., the sensor module 176 in FIG. 1) for detecting a distance to a subject.

In an embodiment, at least one of the first camera module 251 or the third camera module 255 may be replaced with a sensor module (e.g., the sensor module 176 in FIG. 1) (e.g., Lidar sensor). For example, the sensor module may include at least one of a vertical cavity surface emitting laser (VCSEL), an infrared sensor, and/or a photodiode. For example, the photodiode may include a positive intrinsic negative (PIN) photodiode or an avalanche photo diode (APD). The photodiode may be referred to as a photo detector or a photo sensor.

According to an embodiment, at least one of the first camera module 251, the second camera module 253, or the third camera module 255 may include a plurality of camera modules (not shown). For example, the second camera module 253 may be configured as a plurality of lenses (e.g., wide-angle and telephoto lenses) and image sensors, and arranged on one side (e.g., the side facing the -Y-axis) of the wearable device 200. For example, the wearable device 200 may include a plurality of camera modules having different attribute (e.g., angles of view) or functions from each other, and control the camera modules to change the angles of view thereof, based on user selection and/or trajectory information. For example, at least one of the plurality of camera modules may be a wide-angle camera, and at least another may be a telephoto camera.

According to various embodiments, the processor (e.g., processor 120 in FIG. 1) may determine movement of the wearable device 200 and/or movement of the user using information of the wearable device 200 obtained using at least one of a gesture sensor, a gyro sensor, or an acceleration sensor of the sensor module (e.g., the sensor module 176 in FIG. 1) and a user's motion (e.g., approach of the user's body to the wearable device 200) obtained using the second camera module 253. According to an embodiment, the wearable device 200 may include, in addition to the described sensors, a magnetic (geomagnetic) sensor capable of measuring directions using a magnetic field and lines of magnetic force, and/or a Hall sensor capable of obtaining movement information (e.g., a movement direction or a movement distance) using the strength of a magnetic field. For example, the processor may determine movement of the wearable device 200 and/or movement of the user, based on information obtained from the magnetic (geomagnetic) sensor and/or the Hall sensor.

According to various embodiments (not shown), the wearable device 200 may perform an input function (e.g., a touch and/or pressure sensing function) that enables interaction with a user. For example, a component (e.g., a touch sensor and/or a pressure sensor) configured to perform a touch and/or pressure sensing function may be disposed in at least a part of the wearing member 203. The wearable device 200 may control a virtual image output through the display member 201, based on information obtained through the component. For example, the sensor related to the touch and/or pressure sensing function may be configured in various ways, such as a resistive type, a capacitive type, an electromagnetic induction type (EM), or an optical type. According to an embodiment, entirety of some of the component configured to perform the touch and/or pressure sensing function may be the same as the configuration of the input module 150 in FIG. 1.

According to various embodiments, the wearable device 200 may include a reinforcing member 260 that is disposed in the inner space of the lens frame 202 and formed to have a higher rigidity than the rigidity of the lens frame 202.

According to various embodiments, the wearable device 200 may include a lens structure 270. The lens structure 270 may refract at least some of light. For example, the lens structure 270 may be a prescription lens having refractive power. According to an embodiment, the lens structure 270 may be disposed at the rear (e.g., in the +Y direction) of the second window member of the display member 201. For example, the lens structure 270 may be disposed between the display member 201 and the user's eye. For example, the lens structure 270 may face the display member.

According to various embodiments, the housing 210 may include a hinge cover 227 capable of conceal a portion of the hinge structure 229. Another portion of the hinge structure 229 may be stored or concealed between an inner case 231 and an outer case 233, which will be described below.

According to various embodiments, the wearing member 203 may include an inner case 231 and an outer case 233. The inner case 231 may be, for example, a case configured to face the user's body or to come into direct contact with the user's body, and may be made of a material having low thermal conductivity, for example, a synthetic resin. According to an embodiment, the inner case 231 may include an inner side (e.g., the inner side 231c in FIG. 2A) that faces the user's body. The outer case 233 may include, for example, a material (e.g., a metal material) capable of at least partially transferring heat, and may be coupled to face the inner case 231. According to an embodiment, the outer case 233 may include an outer side (e.g., the outer side 231d in FIG. 2A) opposite the inner side 231c. In an embodiment, at least one of the circuit board 241 or the speaker module 245 may be stored in a space separated from the battery 243 inside the wearing member 203. In the illustrated embodiment, the inner case 231 may include a first case 231a that includes the circuit board 241 or the speaker module 245, and a second case 231b that stores the battery 243, and the outer case 233 may include a third case 233a that is coupled to face the first case 231a, and a fourth case 233b that is coupled to face the second case 231b. For example, the first case 231a and the third case 233a may be coupled (hereinafter, "a first case part 231a and 233a") to store the circuit board 241 and/or the speaker module 245, and the second case 231b and the fourth case 233b may be coupled (hereinafter, "a second case part 231b and 233b") to store the battery 243.

According to various embodiments, the first case part 231a and 233a may be pivotally coupled to the lens frame 202 through the hinge structure 229, and the second case part 231b and 233b may be connected or mounted to the end of the first case part 231a and 233a through a connection member 235. In some embodiments, the portion of the connection member 235 that comes into contact with the user's body may be made of a material with low thermal conductivity, for example, an elastic material such as silicone, polyurethane, or rubber, and the portion that does not come into contact with the user's body may be made of a material (e.g., a metal material) with high thermal conductivity. For example, when heat is generated in the circuit board 241 or the battery 243, the connection member 235 may block the heat from being transferred to the portion that is in contact with the user's body, and disperse or release the heat through the portion that is not in contact with the user's body. According to an embodiment, the portion of the connection member 235 that comes into contact with the user's body may be interpreted as a part of the inner case 231, and the portion of the connection member 235 that does not come into contact with the user's body may be interpreted as a part of the outer case 233. According to an embodiment (not shown), the first case 231a and the second case 231b may be configured in an integral form without the connection member 235, and the third case 233a and the fourth case 233b may be configured in an integral form without the connection member 235. According to various embodiments, in addition to the illustrated components, other components (e.g., the antenna module 197 in FIG. 1) may be further included, and information about an object or environment may be received from an external electronic device (e.g., the electronic device 102 or 104 or the server 108 in FIG. 1) through a network (e.g., the first network 198 or the second network 199 in FIG. 1) using the communication module 190.

Although, only the wearable device 200 is illustrated and described in FIGS. 2A and 2B, the disclosure is not limited thereto, and some components of the wearable device 200 illustrated in FIGS. 2A and 2B may also be included in electronic devices such as smartphones and tablet PCs.

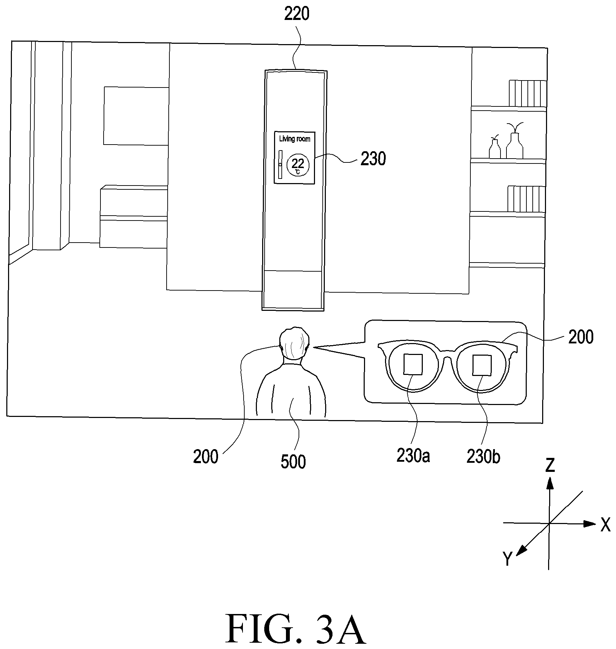

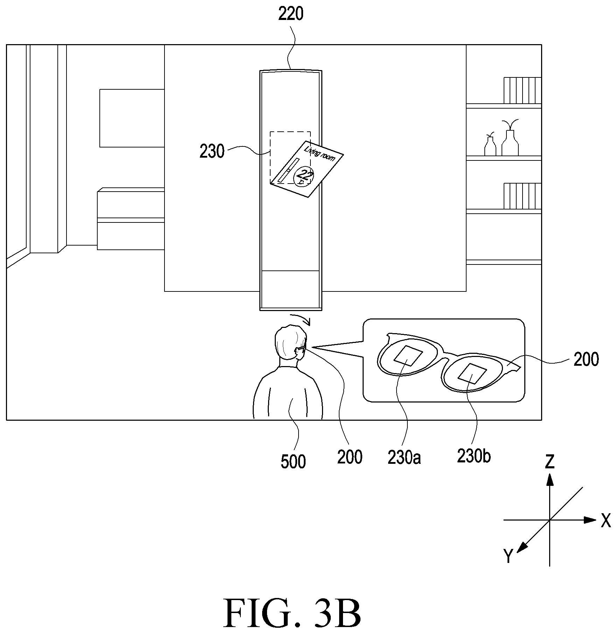

FIGS. 3A and 3B are exemplary drawings illustrating a function or operation of changing and displaying a display state of at least one virtual object (e.g., the virtual object 230), based on movement (e.g., rotation) of a wearable device, according to the prior art.

Referring to FIGS. 3A and 3B, the wearable device 200 may display at least one virtual object 230 through the wearable device 200. The wearable device 200 may control the display module (e.g., the optical output device 211) to display at least one virtual object 230 (e.g., a virtual object for controlling a real object 220 (e.g., an air conditioner)) related to the real object 220 (e.g., an air conditioner) identified through at least one camera (e.g., the second camera module 253). When at least one virtual object 230 is displayed through the wearable device 200, images corresponding to at least one virtual object 230 (e.g., an image 230a corresponding to the left eye of the user 210 and an image 230b corresponding to the right eye of the user 210) may be displayed on the wearable device 200 (e.g., the display member 201). As shown in FIG. 3B, when the user wearing the wearable device 200 rotates (e.g., rotates on the XZ plane) while looking straight ahead, a virtual object 230 is provided to the user 210 through the wearable device 200 while moving according to the rotation of the wearable device 200, which may cause visual discomfort to the user 210 in relation to the real object 220 whose location is fixed in the real world (for example, the real object 220 has a fixed location in the real world, but the virtual object 230 is provided to the user while moving around the real object according to the movement (e.g., rotation) of the wearable device 200).

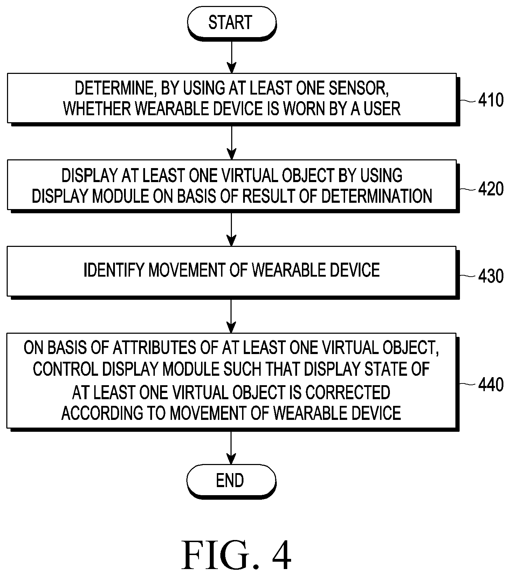

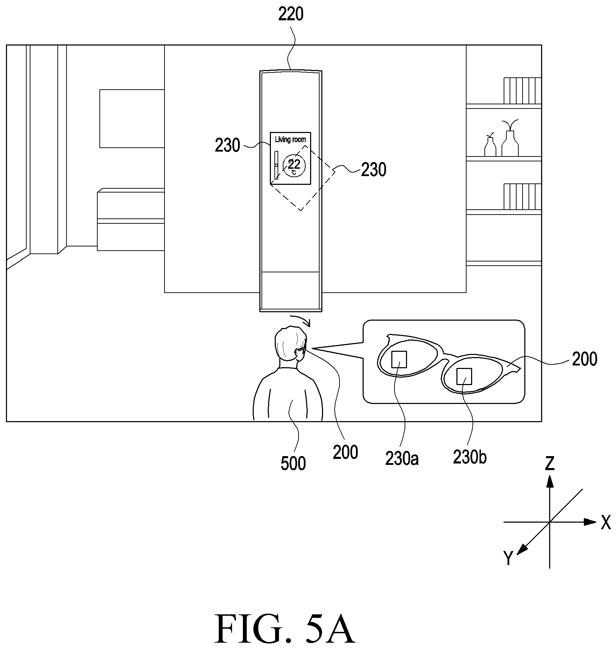

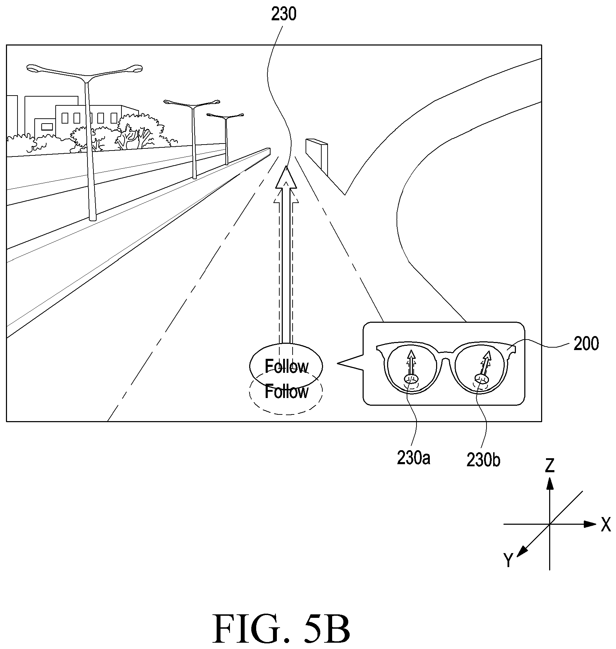

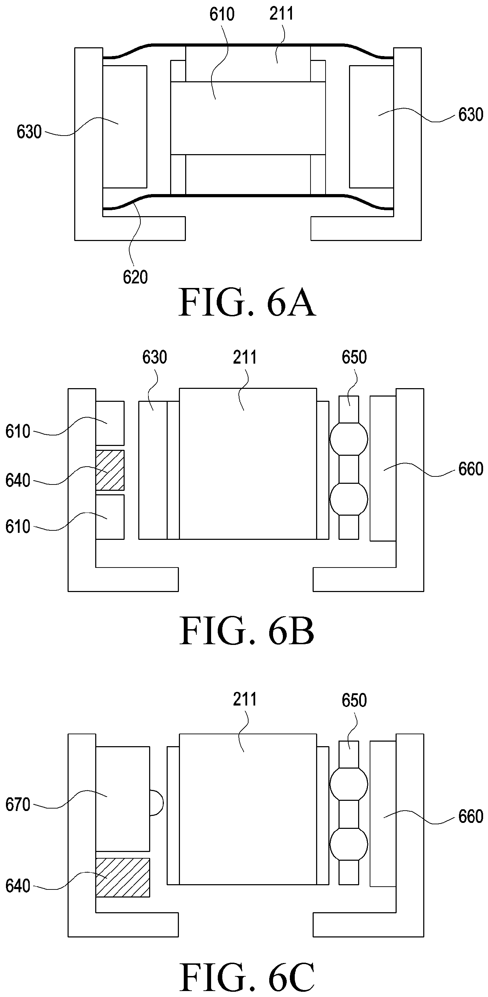

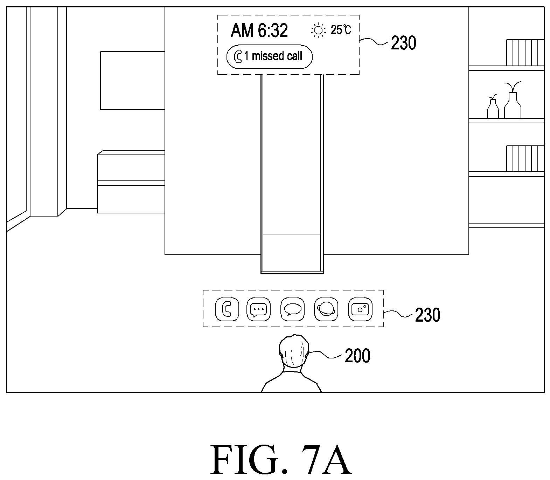

FIG. 4 is an exemplary drawing illustrating a function or operation of correcting and displaying a display state of at least one virtual object 230 by a wearable device 200, despite the movement of the wearable device 200, according to an embodiment of the disclosure. FIGS. 5A and 5B are exemplary drawings illustrating, in relation to a user interface, a function or operation of correcting and displaying a display state of at least one virtual object 230 by a wearable device 200 according to an embodiment of the disclosure. FIGS. 6A to 6C are exemplary drawings illustrating a driving module 600 configured to adjust the position of a display module (e.g., the optical output device 211) for correcting a display state of at least one virtual object 230 according to an embodiment of the disclosure. FIGS. 7A to 7C are exemplary drawings illustrating at least one virtual object 230 to which correction of the display state is not applied according to an embodiment of the disclosure.

Referring to FIG. 4, a wearable device 200 according to an embodiment of the disclosure may determine whether the wearable device 200 is worn by a user 210 using at least one sensor (e.g., a proximity sensor) in operation 410. The wearable device 200 according to an embodiment of the disclosure may identify whether the user 210 is wearing the wearable device 100 through a proximity sensor included in the wearable device 200. Alternatively, the wearable device 200 according to an embodiment of the disclosure may determine whether the wearable device 200 is worn by the user 210, based on whether the wearing member 203 of the wearable device 200 is relatively unfolded with respect to the lens frame 203 (e.g., unfolded state) and whether the proximity of the user 210 is detected while the lens frame 203 of the wearable device 200 is unfolded, through a sensor (e.g., Hall IC) provided in the hinge portion of the wearable device 200.

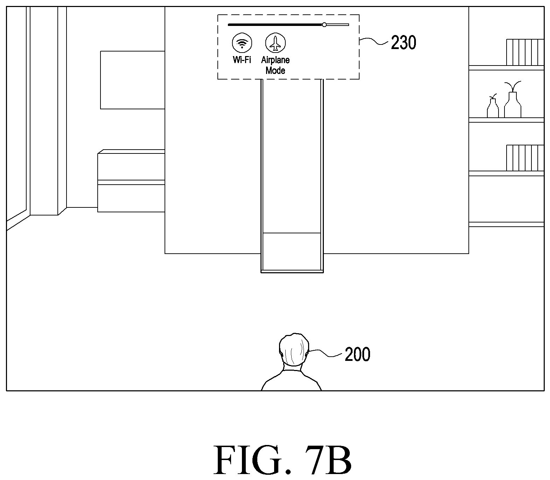

In operation 420, the wearable device 200 according to an embodiment of the disclosure may display at least one virtual object 230 using a display module (e.g., the optical output device 211), based on the determination result in the operation 410. According to an embodiment of the disclosure, when it is determined that the wearable device 200 is worn by the user 210, the wearable device 200 may control the display module (e.g., the optical output device 211) to display at least one virtual object 230 (e.g., to be displayed to the user 210 in the real world). According to an embodiment of the disclosure, at least one virtual object 230 may include at least one of a virtual object 230 for providing information about a real object 220 identified by a wearable device 200 (e.g., a virtual object displayed through an augmented reality navigation application, or a virtual object displayed through an application for providing a jogging route to the user 210 during exercise, as shown in FIG. 5B) and/or a virtual object for controlling a real object 220 identified by the wearable device 200 (e.g., a virtual object for controlling home appliances, as shown in FIG. 5A). In FIG. 5B, an embodiment is exemplarily illustrated in which, in a case where the position of at least one virtual object 230 changes (e.g., at least one virtual object 230 is displayed while shaking) according to the movement (e.g., running) of a user wearing the wearable device 200, the at least one virtual object 230 is displayed without a change in the position according to a correction method according to an embodiment of the disclosure. In FIG. 5B, the display position of the virtual object 230 before correction is illustrated as a dotted line. In other words, as the position correction function or operation according to an embodiment of the disclosure is applied, at least one virtual object 230 may be displayed without shaking according to the user's movement. The wearable device 200 according to an embodiment of the disclosure may include virtual objects (e.g., icons, time information, weather information, and notifications (e.g., notifications for missed calls) on the home screen shown in FIG. 7A, and a notification panel shown in FIG. 7B) that are not related to the real object 220. The wearable device 200 according to an embodiment of the disclosure may identify what type of object the real object 220 is by comparing an image of the real object 220 obtained by the wearable device 200 (e.g., the second camera module 253) with an image stored in the wearable device 200 or an external device (e.g., a server). Alternatively, the wearable device 200 according to an embodiment of the disclosure may identify what type of object the real object 220 is using an artificial intelligence (AI) model. For example, the wearable device 200 according to an embodiment of the disclosure may identify what type of object the real object 220 is using an image of the real object 220 obtained by the wearable device 200 (e.g., the second camera module 253) and learned data. Alternatively, the wearable device 200 according to an embodiment of the disclosure may identify a specific place or location when the wearable device 200 is at the specific place or location, and identify a direction in which the wearable device 200 is facing at the identified specific place or location, thereby identifying the type of at least one real object located in the direction in which the wearable device 200 is facing. To this end, the wearable device 200 according to an embodiment of the disclosure or an external device (e.g., a server) may store location information about at least one real object disposed in a specific place or location. The wearable device 200 according to an embodiment of the disclosure may identify what type of object the real object located in a specific direction is using the location information about the real object and the direction in which the wearable device 200 is facing from the current location. In addition, various technologies for the wearable device 200 to identify the real object 220 located in the real world may be applied to various embodiments of the disclosure. The wearable device 200 according to an embodiment of the disclosure may control a display module (e.g., the optical output device 211) to display at least one virtual object 230 around the real object 220 (e.g., in the case where at least one virtual object 230 is related to the real object 220 as shown in FIGS. 5A and 5B) or at a pre-designated location in the real world (e.g., in the case where at least one virtual object 230 is unrelated to the real object 220 as shown in FIGS. 7A to 7C). According to an embodiment of the disclosure, when it is determined that the wearable device 200 is not worn by the user 210, the wearable device 200 may display at least one virtual object 230 on the display member 201 so as to correspond to the movement of the wearable device 200 (e.g., while maintaining the optical output state of the display module (e.g., the optical output device 211) before the movement of the wearable device 200 occurs). The wearable device 200 according to an embodiment of the disclosure may identify a location of the real object 220 in the real world and/or a distance from the wearable device 200 using at least one camera (e.g., the second camera module 253 and/or the third camera module 255) and/or a sensor in order to display at least one virtual object 230 around the real object 220.

The wearable device 200 according to an embodiment of the disclosure may identify movement (e.g., rotation and/or displacement) of the wearable device 200 in operation 430. The wearable device 200 according to an embodiment of the disclosure may identify movement (e.g., rotation) of the wearable device 200 while at least one virtual object 230 is being displayed. The wearable device 200 according to an embodiment of the disclosure, when the user 210 wearing the wearable device 200 rotates (e.g., rotates on the XZ plane) while looking straight ahead, may identify that the wearable device 200 has rotated by a specified angle through at least one sensor (e.g., a gyro sensor and/or an acceleration sensor) included in the wearable device 200. The wearable device 200 according to an embodiment of the disclosure may identify not only rotational movement of the wearable device 200 (e.g., movement to the left and right on the XZ plane), but also vertical movement of the wearable device 200 (e.g., movement, that is, displacement, of the wearable device 200 along the Z-axis) and/or a combination of movements in various directions (e.g., three-dimensional rotational movement in the XYZ space) through at least one sensor (e.g., a gyro sensor and/or an acceleration sensor) included in the wearable device 200.

In operation 440, the wearable device 200 according to an embodiment of the disclosure may control the display module (e.g., the optical output device 211) so that a display state of at least one virtual object 230 is corrected according to the movement of the wearable device 200, based on an attribute of at least one virtual object 230.

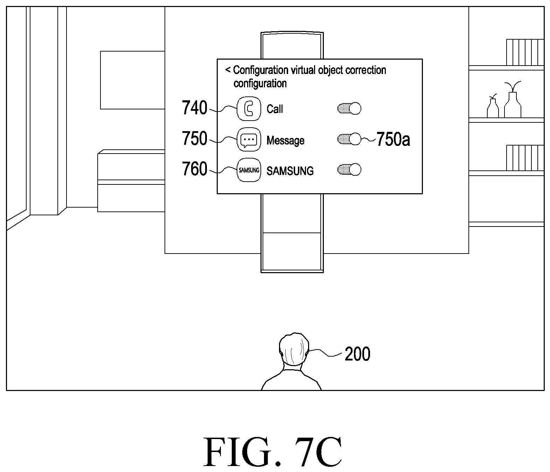

The wearable device 200 according to an embodiment of the disclosure may identify an attribute of at least one virtual object 230 to correct the display state of at least one virtual object 230. The attribute of the virtual object 230 according to an embodiment of the disclosure may include first attribute in which the real object 220 identified by the wearable device 200 and the virtual object 230 are related to each other (e.g., a virtual object 230 for providing information about the real object 220 identified by the wearable device 200 (e.g., a virtual object displayed through an augmented reality navigation application or a virtual object displayed through an application for providing a jogging route to the user 210 during exercise, as shown in FIG. 5B) and/or a virtual object for controlling the real object 220 identified by the wearable device 200 (e.g., a virtual object for controlling home appliances, as shown in FIG. 5A). The attribute of the wearable device 200 according to an embodiment of the disclosure may include second attribute (e.g., icons, time information, weather information, and notifications (e.g., notifications for missed calls) on the home screen shown in FIG. 7A, and a notification panel shown in FIG. 7B) in which the real object 220 identified by the wearable device 200 and the virtual object 230 are not related to each other. The attribute of the wearable device 200 according to an embodiment of the present disclosure may include third attribute indicating that at least one virtual object 230 is provided through an application (e.g., an SMS application 750) designated by the user 210. The designation of the user 210 according to an embodiment of the disclosure may include the user's selection input (e.g., the user's input onto a button 750a) for a list including a plurality of applications (e.g., a call application 740, an SMS application 750, and a Samsung^{®} application 760), as illustrated in FIG. 7C. The attribute of the wearable device 200 according to an embodiment of the disclosure may include fourth attribute indicating that at least one virtual object 230 has a history of having its display information (e.g., a display position and/or a display direction) corrected according to the input from the user 210. The attribute of the wearable device 200 according to an embodiment of the disclosure may include fifth attribute indicating that an input (e.g., a designated gesture or a virtual touch input to at least one virtual object 230) of the user 210 has been obtained to correct the display information of at least one virtual object 230. The wearable device 200 according to an embodiment of the disclosure may identify attribute of at least one virtual object 230 using attribute information of at least one virtual object 230 or an application configured to provide at least one virtual object 230. For example, the wearable device 200 according to an embodiment of the disclosure, when at least one virtual object 230 is provided to the wearable device 200 through a first designated application (e.g., a home appliance control application (e.g., Samsung^{®} Smart Things^{™}) or an application designated by the user 210), may determine at least one virtual object 230 to be a virtual object 230 related to the real object 220. The wearable device 200 according to an embodiment of the disclosure, when at least one virtual object 230 is provided to the wearable device 200 through a second designated application (e.g., a launcher application, an SMS application, a call application, etc.), may determine at least one virtual object 230 to be a virtual object 230 that is not related to the real object 220. The wearable device 200 according to an embodiment of the disclosure may determine what type of virtual object at least one virtual object 230 displayed on the wearable device 200 is (e.g., whether it is a virtual object for controlling a home appliance (e.g., an air conditioner) or a virtual object for system notification (e.g., a battery level warning, reception of a text message, etc.)) using information (e.g., metadata) stored in association with at least one virtual object 230, and then identify attribute of at least one virtual object 230. The wearable device 200 according to an embodiment of the disclosure may determine the authority of an application and determine that at least one virtual object 230 provided through an application with a designated authority (e.g., authority to access the camera module) is a virtual object 230 related to the real object 220.

The wearable device 200 according to an embodiment of the disclosure may control the display module (e.g., the optical output device 211) so that a display state of at least one virtual object 230 is corrected according to the movement of the wearable device 200. The wearable device 200 according to an embodiment of the disclosure, in the case where the display module (e.g., the optical output device 211) includes at least one light source (e.g., when the optical output device 211 includes an LCoS), may control the display module (e.g., the optical output device 211) to change the light output angle of the light source and output light to the display member 201 so that a display state of at least one virtual object 230 is corrected according to the movement of the wearable device 200. The wearable device 200 according to an embodiment of the disclosure may change the light output angle of the display module (e.g., the optical output device 211) using a look-up table defining a relationship between the degree of movement (e.g., a rotation angle and/or displacement) of the wearable device 200 and the light output angle. The look-up table according to an embodiment of the disclosure may be stored in the wearable device 200 or in an external device (e.g., a server). In the case where the display module (e.g., the optical output device 211) of the wearable device 200 according to an embodiment of the disclosure does not include a light source (e.g., when the optical output device 211 includes a micro-LED), the wearable device 200 may control the display module (e.g., the optical output device 211) to change the angle of the panel of the display module (e.g., the optical output device 211) and output light to the display member 201 so that the display state of at least one virtual object 230 is corrected according to the movement of the wearable device 200. The wearable device 200 according to an embodiment of the disclosure may change the light output angle of the display module (e.g., the optical output device 211) using a look-up table defining a relationship between the degree of movement (e.g., a rotation angle and/or displacement) of the wearable device 200 and the angle of the panel of the display module (e.g., the optical output device 211). The wearable device 200 (e.g., the display module) according to an embodiment of the disclosure may include a driving circuit for changing the angle of the light source and/or panel. The wearable device 200 according to an embodiment of the disclosure may include a driving module 600 for changing an arrangement state (e.g., an angle) of the display module (e.g., the optical output device 211). The wearable device 200 according to an embodiment of the disclosure may control the display module (e.g., the optical output device 211) so that the display state of at least one virtual object 230 is corrected according to the movement of the wearable device 200 by changing the arrangement state of the display module (e.g., the optical output device 211) using the driving module 600. The wearable device 200 according to an embodiment of the disclosure may change the arrangement state (e.g., angle) of the display module (e.g., the optical output device 211) using a look-up table defining a relationship between the degree of movement (e.g., a rotation angle and/or displacement) of the wearable device 200 and the arrangement state of the display module (e.g., the optical output device 211). The look-up table according to an embodiment of the disclosure may be stored in the wearable device 200 or in an external device (e.g., a server).

Referring to FIG. 6A, the driving module 600 according to an embodiment of the disclosure may include a driving module 600 of a voice coil motor (VCM) type. The driving module 600 of a voice coil motor (VCM) type according to an embodiment of the disclosure may include a coil 610, a leaf spring 620, and/or a magnet 630. The driving module 600 of a voice coil motor (VCM) type according to an embodiment of the disclosure is a driving module using electromagnetic force, and may change the arrangement state of the display module (e.g., the optical output device 211) using the leaf spring 620. Referring to FIG. 6B, the driving module 600 according to an embodiment of the disclosure may include an encoder-type driving module 600. The encoder-type driving module 600 according to an embodiment of the disclosure may include a coil 610, a magnet 630, a position sensor 640, a ball bushing 650, and a guide groove 660. The encoder-type driving module 600 according to an embodiment of the disclosure may operate using electromagnetic force. The wearable device 200 according to an embodiment of the disclosure may change the arrangement state of the display module (e.g., the optical output device 211), based on the position of the display module (e.g., the optical output device 211) sensed using the position sensor 640. Referring to FIG. 6C, the driving module 600 according to an embodiment of the disclosure may include a piezoelectric driving module 600. The piezoelectric driving module 600 according to an embodiment of the disclosure may include a position sensor 640, a ball bushing 650, a guide groove 6606, and/or a piezoelectric vibrator 670. The encoder-type driving module 600 according to an embodiment of the disclosure may be a driving module using a piezoelectric element whose length increases when current and/or voltage is applied. The wearable device 200 according to an embodiment of the disclosure may change the arrangement state of the display module (e.g., the optical output device 211), based on a position of the display module (e.g., the optical output device 211) sensed using the position sensor 640.

According to various embodiments of the disclosure described above, the wearable device 200 may control the display module (e.g., the optical output device 211) to correct the display state of at least one virtual object 230 according to the movement of the wearable device 200, based on the attribute of at least one virtual object 230. According to another embodiment of the disclosure, the wearable device 200 may correct the display state of at least one virtual object 230 according to the movement of the wearable device 200, based on the attribute of at least one virtual object 230, without changing the light output angle of the light source and/or the angle of the panel of the display module (e.g., the optical output device 211). The wearable device 200 according to an embodiment of the disclosure may correct the display state of at least one virtual object 230 according to the movement of the wearable device 200 through position correction information (e.g., a look-up table defining a relationship between an angle at which the wearable device 200 is tilted and a correction angle of the virtual object 230) pre-stored in the wearable device 200 and/or an algorithm.

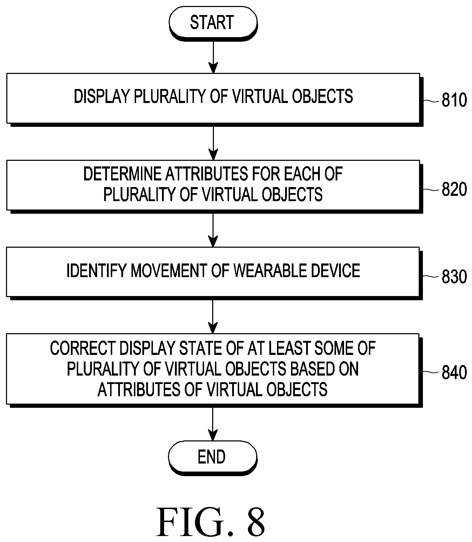

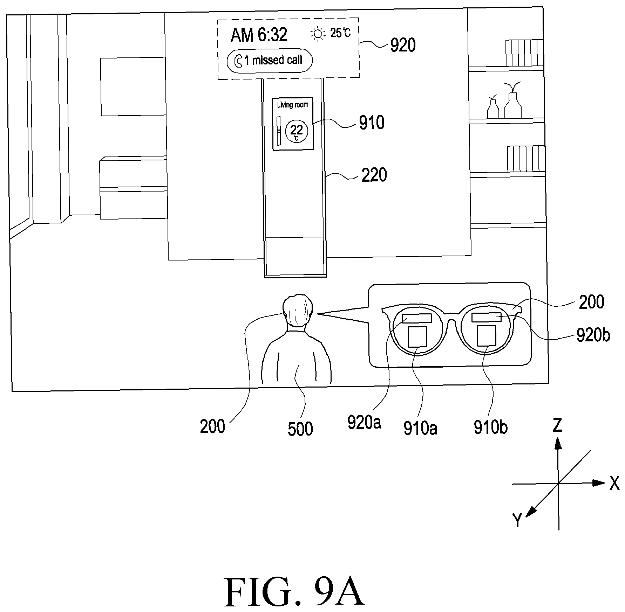

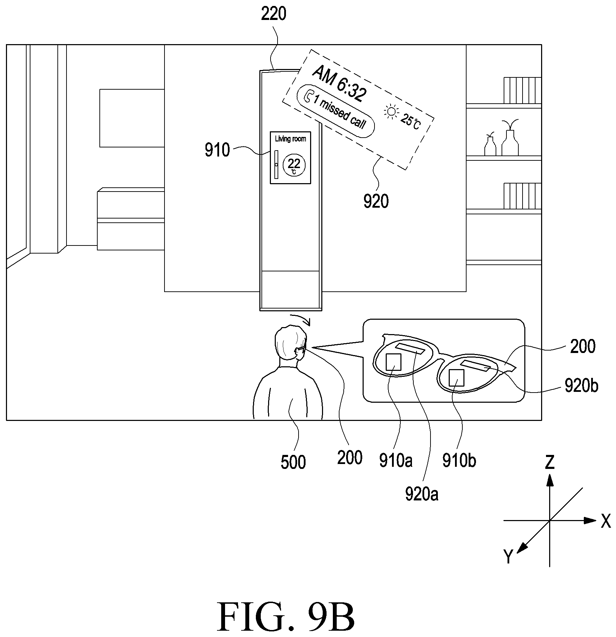

FIG. 8 is an exemplary drawing illustrating a function or operation of a wearable device 200 for correcting a display state of at least some virtual objects (e.g., a first virtual object 910) among a plurality of virtual objects (e.g., the first virtual object 910 and the second virtual object 920), based on attribute of each of the plurality of virtual objects (e.g., the first virtual object 910 and the second virtual object 920), according to an embodiment of the disclosure. FIGS. 9A and 9B are exemplary drawings illustrating, in relation to a user interface, a function or operation according to the embodiment of the disclosure described in FIG. 8.

Referring to FIG. 8, the wearable device 200 according to an embodiment of the disclosure may display a plurality of virtual objects (e.g., a first virtual object 910 and a second virtual object 920) in operation 810. Referring to FIG. 9A, the wearable device 200 according to an embodiment of the disclosure may display a virtual object (e.g., a first virtual object 910) for controlling a home appliance and a screen (e.g., a second virtual object 920) including time information, weather information, and missed call information.

The wearable device 200 according to an embodiment of the disclosure may determine attribute for each of the plurality of virtual objects (e.g., the first virtual object 910 and the second virtual object 920) in operation 820. The wearable device 200 according to an embodiment of the disclosure may determine attribute for each of the plurality of virtual objects (e.g., the first virtual object 910 and the second virtual object 920) according to various embodiments of the disclosure described above. The wearable device 200 according to an embodiment of the disclosure may identify the virtual object (e.g., the first virtual object 910) for controlling a home appliance to be a virtual object having first attribute. The wearable device 200 according to an embodiment of the disclosure may identify a screen (e.g., the second virtual object 920) including time information, weather information, and missed call information to be a virtual object having second attribute.

The wearable device 200 according to an embodiment of the disclosure may identify movement (e.g., rotation and/or displacement) of the wearable device 200 in operation 830. The wearable device 200 according to an embodiment of the disclosure may identify movement of the wearable device 200 while the plurality of virtual objects (e.g., the first virtual object 910 and the second virtual object 920) are being displayed. The wearable device 200 according to an embodiment of the disclosure, when the user 210 wearing the wearable device 200 rotates (e.g., rotates on an XZ plane) while looking straight ahead, may identify that the wearable device 200 has rotated at a specified angle through at least one sensor (e.g., a gyro sensor and/or an acceleration sensor) included in the wearable device 200. The wearable device 200 according to an embodiment of the disclosure may identify not only rotational movement of the wearable device 200 (e.g., movement to the left and right on the XZ plane), but also vertical movement (e.g., displacement) of the wearable device 200 and/or a combination of movements in various directions (e.g., three-dimensional rotational movement in the XYZ space) through at least one sensor (e.g., a gyro sensor and/or an acceleration sensor) included in the wearable device 200.

The wearable device 200 according to an embodiment of the disclosure, in operation 840, may correct a display state of at least some virtual objects (e.g., the first virtual object 910) among the plurality of virtual objects (e.g., the first virtual object 910 and the second virtual object 920), based on the attribute of the virtual objects. Referring to FIG. 9B, the wearable device 200 according to an embodiment of the disclosure, when rotational movement of the wearable device 200 is identified, may correct a display state of a virtual object (e.g., the first virtual object 910) having the first attribute, and display a display state of a virtual object (e.g., the second virtual object 920) having the second attribute to correspond to the rotational movement of the wearable device 200 (e.g., while maintaining an optical output state of the display module (e.g., the optical output device 211) before the movement of the wearable device 200 occurs). According to an embodiment of the disclosure, when at least one virtual object 230 is displayed through the wearable device 200, images (e.g., images 910a and 920a corresponding to the left eye of the user 210 and images 910b and 920b corresponding to the right eye of the user 210) corresponding to the plurality of virtual objects (e.g., the first virtual object 910 and the second virtual object 920) may be displayed on the wearable device 200 (e.g., the display member 201).

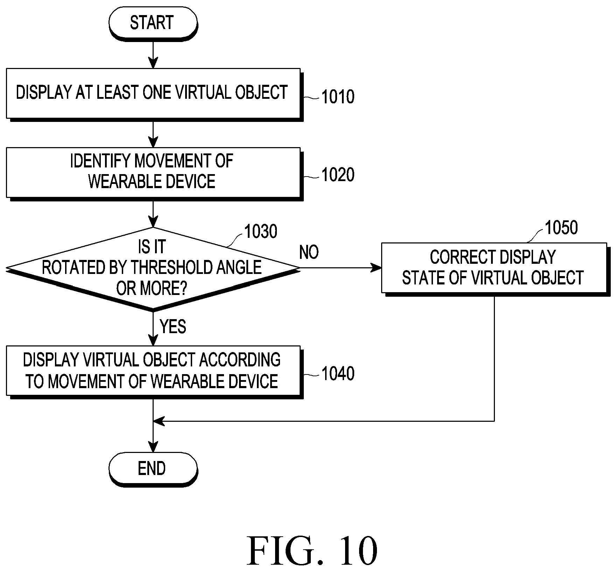

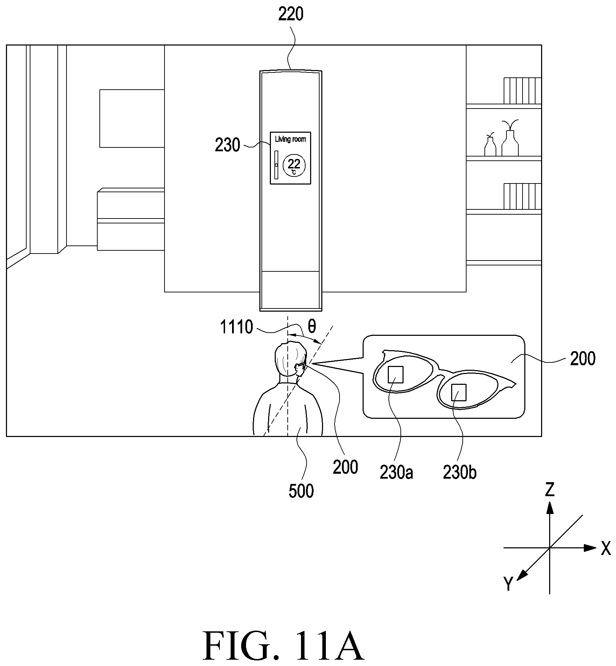

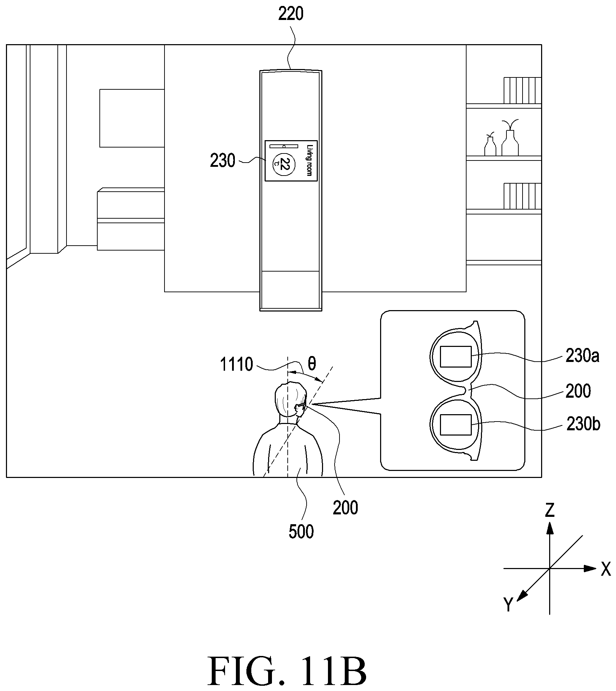

FIG. 10 is an exemplary drawing illustrating a function or operation of rotating and displaying at least one virtual object 230 according to movement (e.g., rotation) of a wearable device 200 when the wearable device 200 is rotated at a threshold angle or more according to an embodiment of the disclosure. FIGS. 11A and 11B are exemplary drawings illustrating, in relation to a user interface, a function or operation according to the embodiment of the disclosure described in FIG. 10.

Referring to FIG. 10, a wearable device 200 according to an embodiment of the disclosure may display at least one virtual object 230 using the display module (e.g., the optical output device 211) in operation 1010. The wearable device 200 according to an embodiment of the disclosure, when it is determined that the wearable device 200 is worn by the user 210, may control the display module (e.g., the optical output device 211) to display at least one virtual object 230 (e.g., to be displayed to the user 210 in the real world). The wearable device 200 according to an embodiment of the disclosure may control the display module (e.g., the optical output device 211) to display at least one virtual object 230 around the real object 220, as illustrated in FIG. 11A.

The wearable device 200 according to an embodiment of the disclosure may identify movement (e.g., rotation and/or displacement) of the wearable device 200 in operation 1020. The wearable device 200 according to an embodiment of the disclosure may identify movement (e.g., rotation) of the wearable device 200 while at least one virtual object 230 is being displayed. The wearable device 200 according to an embodiment of the disclosure, when the user 210 wearing the wearable device 200 rotates (e.g., rotates on the XZ plane) while looking straight ahead, may identify that the wearable device 200 has rotated by a specified angle through at least one sensor (e.g., a gyro sensor and/or an acceleration sensor) included in the wearable device 200. The wearable device 200 according to an embodiment of the disclosure may identify not only rotational movement of the wearable device 200 (e.g., movement to the left and right on the XZ plane), but also vertical movement of the wearable device 200 (e.g., movement, that is, displacement, of the wearable device 200 along the Z-axis) and/or a combination of movements in various directions (e.g., three-dimensional rotational movement in the XYZ space) through at least one sensor (e.g., a gyro sensor and/or an acceleration sensor) included in the wearable device 200.

The wearable device 200 according to an embodiment of the disclosure, in operation 1030, may determine whether the wearable device 200 has rotated by a threshold angle 1110 (e.g., 60 degrees) or more. The wearable device 200 according to an embodiment of the disclosure may identify the rotation angle of the wearable device 200 (e.g., the rotation angle relative to Z on the XZ plane) using at least one sensor (e.g., a gyro sensor and/or an acceleration sensor).

The wearable device 200 according to an embodiment of the disclosure, in operation 1040, when it is identified that the wearable device 200 has rotated by the threshold angle 1110 (e.g., 60 degrees) or more as a result of the determination in operation 1030, may display at least one virtual object 230 according to the movement of the wearable device 200. For example, as illustrated in FIG. 11B, the wearable device 200 according to an embodiment of the disclosure may display at least one virtual object 230 corresponding to the rotation angle of the wearable device 200. The wearable device 200 according to an embodiment of the disclosure, in operation 1050, when it is identified that the wearable device 200 has not rotated by the threshold angle 1110 (e.g., 60 degrees) or more as a result of the determination in operation 1030, may correct and display a display state of at least one virtual object 230 according to various embodiments of the disclosure. According to another embodiment of the disclosure, when it is identified that the wearable device 200 has not rotated by the threshold angle 1110 (e.g., 20 degrees) or more, the wearable device 200 may not correct the display state of at least one virtual object 230. In this case, according to another embodiment of the disclosure, the wearable device 200 may be configured to correct and display the display state of at least one virtual object 230 when it has rotated by the threshold angle 1110 (e.g., 20 degrees) or more.

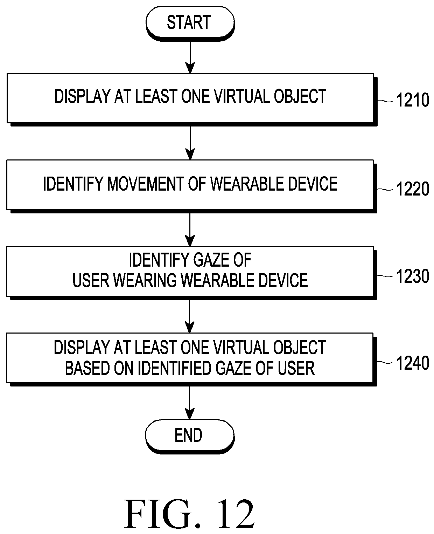

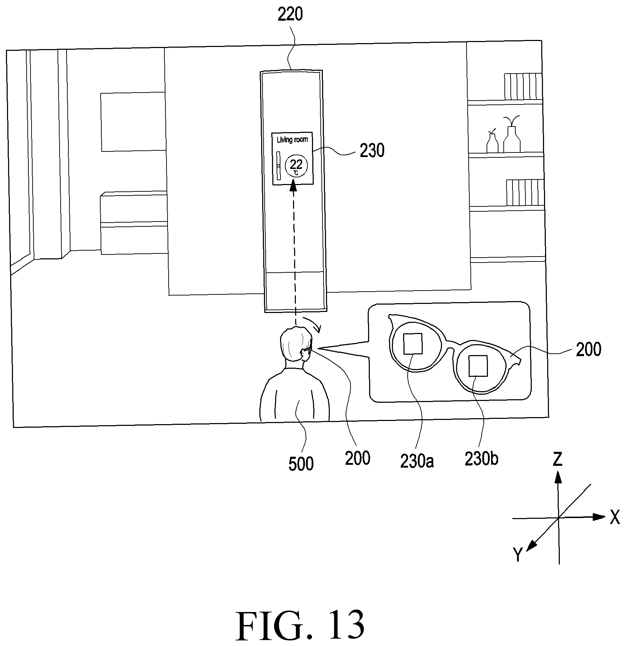

FIG. 12 is an exemplary drawing illustrating a function or operation of displaying at least one virtual object 230, based on a gaze of a user 210 wearing a wearable device 200, according to an embodiment of the disclosure. FIG. 13 is an exemplary drawing illustrating, in relation to a user interface, a function or operation according to the embodiment of the disclosure described in FIG. 12.

Referring to FIG. 12, a wearable device 200 according to an embodiment of the disclosure may display at least one virtual object 230 using the display module (e.g., the optical output device 211) in operation 1210. The wearable device 200 according to an embodiment of the disclosure may control the display module (e.g., the optical output device 211) to display at least one virtual object 230 (e.g., to be displayed to the user 210 in the real world) when it is determined that the wearable device 200 is worn by the user 210. The wearable device 200 according to an embodiment of the disclosure may control the display module (e.g., the optical output device 211) to display at least one virtual object 230 around the real object 220, as illustrated in FIG. 13.

The wearable device 200 according to an embodiment of the disclosure may identify movement (e.g., rotation and/or displacement) of the wearable device 200 in operation 1220. The wearable device 200 according to an embodiment of the disclosure may identify movement (e.g., rotation) of the wearable device 200 while at least one virtual object 230 is being displayed. The wearable device 200 according to an embodiment of the disclosure, when the user 210 wearing the wearable device 200 rotates (e.g., rotates on the XZ plane) while looking straight ahead, may identify that the wearable device 200 has rotated by a specified angle through at least one sensor (e.g., a gyro sensor and/or an acceleration sensor) included in the wearable device 200. The wearable device 200 according to an embodiment of the disclosure may identify not only rotational movement of the wearable device 200 (e.g., movement to the left and right on the XZ plane), but also vertical movement of the wearable device 200 (e.g., movement, that is, displacement, of the wearable device 200 along the Z-axis) and/or a combination of movements in various directions (e.g., three-dimensional rotational movement in the XYZ space) through at least one sensor (e.g., a gyro sensor and/or an acceleration sensor) included in the wearable device 200.

The wearable device 200 according to an embodiment of the disclosure, in operation 1230, may identify a gaze of the user 210 wearing the wearable device 200. The wearable device 200 according to an embodiment of the disclosure may identify (e.g., track) a gaze of the user 210 through at least one camera (e.g., the first camera module 251 and/or the third camera module 255). Operation 1230 according to an embodiment of the disclosure may be performed at the same time as operation 1210 or at a different time therefrom.

The wearable device 200 according to an embodiment of the disclosure, in operation 1240, may display at least one virtual object 230, based on the gaze of the user 210 identified in operation 1230. The wearable device 200 according to an embodiment of the disclosure, when the gaze of the user 210 is directed toward the real object 220 despite movement of the wearable device 200 (e.g., when the state of looking at the real object 220 is maintained), may display a virtual object 230 related to at least one real object around the real object 220 as illustrated in FIG. 13.

A wearable device 200 according to an embodiment of the disclosure includes at least one sensor (e.g., the sensor module 176), a display module (e.g., the optical output device 211), and at least one processor (e.g., the processor 120), wherein the at least one processor may be configured to determine, using the at least one sensor, whether the wearable device 200 is worn by a user 210, based on a result of the determination, display, using the display module, at least one virtual object 230, identify movement of the wearable device while the at least one virtual object is being displayed, and based on an attribute of the at least one virtual object being displayed, control the display module so that a display state of the at least one virtual object is corrected according to the movement of the wearable device.

A method for controlling a wearable device 200 according to an embodiment of the disclosure may include determining, using at least one sensor of the wearable device, whether the wearable device is worn by a user, based on a result of the determination, displaying, using a display module of the wearable device, at least one virtual object, identifying movement of the wearable device while the at least one virtual object is being displayed, and, based on an attribute of the at least one virtual object being displayed, controlling the display module so that a display state of the at least one virtual object is corrected and displayed according to the movement of the wearable device.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 2540) including one or more instructions that are stored in a storage medium (e.g., internal memory 2536 or external memory 2538) that is readable by a machine (e.g., the electronic device 2501). For example, a processor (e.g., the processor 2520) of the machine (e.g., the electronic device 2501) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. A wearable device comprising:
at least one sensor;
a display module; and
at least one processor,
wherein the at least one processor is configured to:
determine, using the at least one sensor, whether the wearable device is worn by a user;
based on a result of the determination, display, using the display module, at least one virtual object;
identify movement and/or rotation of the wearable device while the at least one virtual object is being displayed; and
based on an attribute of the at least one virtual object being displayed, control the display module so that a display state of the at least one virtual object is corrected according to the movement and/or rotation of the wearable device.

2. The wearable device of claim 1,
wherein the at least one processor is further configured to determine the attribute of the at least one virtual object being displayed, based on whether the at least one virtual object is related to a real object included in a real world shown to the user wearing the wearable device, whether the at least one virtual object is a virtual object displayed based on a designated application, or whether the at least one virtual object is a virtual object having a history of having the display state corrected by the user.

3. The wearable device of claim 1 or 2,
wherein the at least one processor is further configured to determine, in a case where the at least one virtual object comprises a plurality of virtual objects, the attribute for each of the plurality of virtual objects.

4. The wearable device of any one of claims 1 to 3,
wherein the at least one processor is further configured to perform correction of the display state for a first virtual object among the plurality of virtual objects based on the determined attribute, and display, regardless of the movement and/or rotation of the wearable device, a second virtual object among the plurality of virtual objects.

5. The wearable device of any one of claims 1 to 4,
wherein the at least one processor is further configured to control the display module so that, after performing the correction, at least one of a frame rate or resolution for the at least one virtual object on which the correction has been performed is increased.

6. The wearable device of any one of claims 1 to 5,
wherein the at least one processor is further configured to control the display module so that, in a case where a rotation angle of the wearable device is greater than or equal to a threshold angle, the at least one virtual object is corrected and displayed according to the rotation of the wearable device.

7. The wearable device of any one of claims 1 to 6,
wherein the at least one processor is further configured to control the display module so that the display state of the at least one virtual object is corrected and displayed according to the rotation of the wearable device, based on determining that the wearable device is not worn by the user.

8. The wearable device of any one of claims 1 to 7,
further comprising at least one camera configured to track a gaze of the user,
wherein the at least one processor is further configured to control the display module so that, in a case where a direction of the gaze of the user and a direction of movement of the wearable device are different from each other, the at least one virtual object is displayed around the real object, based on the gaze of the user identified by the at least one camera.

9. The wearable device of any one of claims 1 to 8,
further comprising a driving module configured to adjust a position of the display module so that the display state of the at least one virtual object is corrected and displayed.

10. The wearable device of any one of claims 1 to 9,
wherein the at least one processor is further configured to identify a location of the real object and control the display module to display, regardless of the movement and/or rotation of the wearable device, the at least one virtual object around the real object.

11. A method for controlling a wearable device, the method comprising:
determining, using at least one sensor of the wearable device, whether the wearable device is worn by a user;
based on a result of the determination, displaying, using a display module of the wearable device, at least one virtual object;
identifying movement and/or rotation of the wearable device while the at least one virtual object is being displayed; and
based on an attribute of the at least one virtual object being displayed, controlling the display so that a display state of the at least one virtual object is corrected and displayed according to the movement and/or rotation of the wearable device.

12. The method for controlling a wearable device of claim 11,
further comprising determining the attribute of the at least one virtual object being displayed, based on whether the at least one virtual object is related to a real object included in a real world shown to the user wearing the wearable device, whether the at least one virtual object is a virtual object displayed based on a designated application, or whether the at least one virtual object is a virtual object having a history of having the display state corrected by the user.

13. The method for controlling a wearable device of claim 11 or 12,
further comprising determining, in a case where the at least one virtual object comprises a plurality of virtual objects, the attribute for each of the plurality of virtual objects.

14. The method for controlling a wearable device of any one of claims 11 to 13,
further comprising performing correction of the display state for a first virtual object among the plurality of virtual objects based on the determined attribute, and displaying, regardless of the movement and/or rotation of the wearable device, a second virtual object among the plurality of virtual objects.

15. The method for controlling a wearable device of any one of claims 11 to 14,
further comprising controlling the display module so that, after performing the correction, at least one of a frame rate or resolution for the at least one virtual object on which the correction has been performed is increased.
